# FASCICULE DE BREVET EUROPEEN

(11) **EP 2 000 066 B1**
(45) Date de publication et mention de la délivrance du brevet: **26.05.2010**
(21) Numéro de dépôt: 07291034.2
(22) Date de dépôt: 22.08.2007
(51) Int. Cl.: A47J 37/06

(54) **Support pour la cuisson d'une faible quantité d'aliment**
Medium zum Kochen einer kleinen Menge an Lebensmitteln
Medium for cooking a small amount of food

(30) Priorité: 23.08.2006 FR 0607474
(43) Date de publication de la demande: 10.12.2008
(73) Titulaire: SEB SA, 69130 Ecully (FR)
(72) Inventeur: Lequy, David, 73000 Chambery-le-Vieux (FR)
(74) Mandataire: Lemoine, Jean-Sébastien

(56) Documents cités:
- DE-A1- 3 114 050
- DE-U1- 8 526 977
- US-A1- 2 247 230

## Description

La présente invention concerne un récipient pour la cuisson, par un appareil à raclette, de portions d'aliment en faible quantité par rapport à sa contenance, récipient comprenant une paroi de fond de réception de l'aliment et une paroi périphérique fermée qui s'étend sensiblement perpendiculairement vers le haut depuis la paroi de fond et porte, sur une section de manipulation, en ergot saillant vers l'extérieur. Un tel récipient est conçu pour la cuisson de faible quantité d'aliment et est amené à subir d'importantes contraintes thermiques proches d'une chauffe à sec par sa proximité d'une résistance électrique et par la faible quantité d'aliment qu'il contient.

Les documents DE 8526977 U et US 2 247 230 A sont considérés comme utile à la compréhension de l'invention.

Un tel récipient est par exemple celui d'une coupelle pour un appareil à raclette, adaptée à contenir une petite quantité d'aliment, du fromage, et à reposer sur une sole de l'appareil, sous une résistance électrique de l'appareil. Les coupelles comprennent au moins une partie de leur structure à moins de 4 cm de la résistance électrique, et, sauf dans le cas d'une utilisation non conventionnelle, ne supportent que très peu d'aliments comparé à leur contenance (à leur potentiel géométrique).

La présente invention vise à réaliser de nouveaux récipients.

Selon l'invention, le récipient est réalisé en acier, ses parois ont une épaisseur de moins d'1 mm, et, de préférence, d'environ 0,5 mm, voire d'environ 0,4 mm, et la paroi périphérique présente un bord roulé le long de son rebord libre.

Cette combinaison de caractéristique (la nature du matériau, l'épaisseur des parois et la présence du bord roulé) permet d'avoir un support, d'une part, particulièrement rigide malgré la faible épaisseur de ses parois, et, d'autre part, ayant une bonne tenue malgré les importantes contraintes thermiques qu'il supporte dues notamment à la très faible quantité d'aliment qu'il contient (ce qui rapproche ses conditions d'utilisation à un chauffage à sec), et à sa proximité immédiate de moyens de chauffe d'un appareil de cuisson (moins de 4 cm), en utilisation normale. Cette combinaison permet également de rendre difficilement accessible (voire inaccessible) l'extrémité libre de la paroi périphérique et donc, d'une part, de protéger l'utilisateur d'un contact désagréable avec cette extrémité libre qui peut s'avérer particulièrement coupante, notamment dans le cas où l'épaisseur de la paroi est particulièrement faible (moins de 0,6 mm), et, d'autre part, de protéger de la corrosion l'extrémité libre (la tranche) de la paroi périphérique, surtout quand le support est réalisé par emboutissage et découpe d'une feuille d'acier préalablement revêtu d'une protection adéquate. De plus, ce support présente l'avantage d'être très léger, malgré l'emploi de l'acier qui se trouve être plus économique que l'aluminium habituellement employé.

D'autres avantages et particularités apparaîtront dans la description du mode de réalisation donné à titre d'exemple non limitatif et illustré par les dessins annexés dans lesquels :
La figure 1 est une coupelle pour appareil à raclette vue en coupe longitudinale ; et
La figure 2 est une vue de côté de la même coupelle.

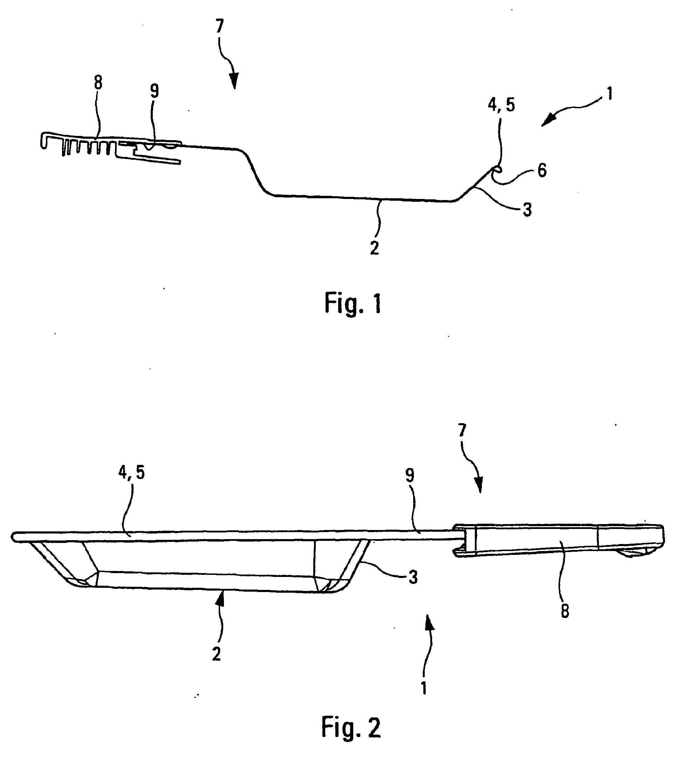

Les figures 1 et 2 illustrent un support de cuisson 1 qui est conçu pour la cuisson d'aliments à l'aide d'un appareil de cuisson, et qui est amené à subir d'importantes contraintes thermiques, proches d'une chauffe à sec, par sa proximité des moyens de chauffage (la résistance électrique) de l'appareil de cuisson, et par la faible quantité d'aliment qu'il contient comparativement à leur contenance potentielle.

Ce support de cuisson 1 comprend une paroi de fond 2 qui est utilisée pour la réception de l'aliment, et une paroi périphérique 3 fermée qui s'étend sensiblement perpendiculairement depuis la paroi de fond 2 et qui présente un rebord libre 4 opposé à la paroi de fond 2. Ces parois 2,3 sont, dans le présent mode de réalisation, des parois pleines, c'est à dire sans orifices les traversant.

Le support de cuisson 1 sont réalisé en acier, ses parois 2,3 ont une épaisseur de moins d'1 mm (de préférence, d'environ 0,5 mm, voire d'environ 0,4 mm), et sa paroi périphérique 3 présente un bord roulé 5 le long du rebord libre 4 correspondant.

De ce fait, le support de cuisson 1 demeure léger bien qu'il ne soit pas réalisé en aluminium mais en acier (qui présente un coût nettement moins important que l'aluminium). Le support de cuisson 1 présente une bonne rigidité, même malgré les importantes contraintes thermiques qu'il supporte. De plus, la présence du bord roulé 5 permet également de protéger l'utilisateur de tout danger du fait que l'extrémité libre 6 de la paroi périphérique 3 se trouve difficilement accessible (orienté vers l'intérieur du bord roulé 5), le danger étant d'autant plus important que l'épaisseur de l'extrémité libre 6 de la paroi périphérique 3 est faible.

Par ailleurs, dans le présent mode de réalisation, le support de cuisson 1 étant réalisé après découpe et emboutissage d'une feuille d'acier qui a été préalablement revêtue de façon adéquate (antiadhésif et protection contre la corrosion), l'extrémité libre 6 de la paroi périphérique 3 (la tranche) n'est pas revêtue et la présence du bord roulé 5 permet de limiter (voire empêcher selon l'importance du roulement) la corrosion.

Dans le présent mode de réalisation, le support de cuisson 1 est un récipient 1 d'une coupelle 7 pour un appareil à raclette. La coupelle 7 comprend, outre le récipient 1 qui est adapté à contenir une portion d'aliment à cuire (typiquement, du fromage à faire fondre), un manche 8 permettant la manipulation du récipient 1. Cette coupelle 7 est conformée de façon à pouvoir être correctement placé dans un appareil à raclettes, et plus précisément, sur une sole. L'appareil à raclette comprend classiquement, outre la sole sur laquelle les coupelles 7 reposent lors de la cuisson des portions d'aliment, un dispositif électrique de chauffe par rayonnement (typiquement, une résistance électrique de chauffe) qui est disposé au-dessus de la sole et duquel le rebord libre 4 (supérieur) de la paroi périphérique 3 peut être particulièrement proche (1 ou 2 cm).

De façon classique, la paroi de fond 2 (plane et pleine) est adaptée à reposer sur la sole de l'appareil à raclette. La paroi périphérique fermée 3 comprend une section de manipulation où elle porte un ergot 9. L'ergot 9 est saillant, vers l'extérieur, perpendiculairement à la section de manipulation et sert de moyen d'ancrage du manche 8. De par la fonction de l'ergot 9, la section de manipulation est la section de la paroi périphérique 3 la plus accessible pour l'utilisateur quand la coupelle 7 repose sur la sole.

Dans le présent mode de réalisation, le bord roulé 5 s'étend le long de la totalité du rebord libre 4 supérieure de la paroi périphérique 3 (c'est-à-dire y compris l'ergot 9). Ce bord roulé 5 présente une certaine largeur, ce qui permet de créer une surface d'appui importante et stabilisatrice facilitant l'empilement de plusieurs coupelles, les bords roulés 5 reposant les uns sur les autres. De plus, comme le bord roulé 5 présente également une certaine hauteur, la stabilité de l'empilement est accrue (surtout quand le manche 8 est de faible épaisseur ou quand il est séparé de l'ergot 9 - dans le cas d'un manche 8 amovible). Ici, le long de la section de manipulation, le bord roulé 5 a été écrasé pour permettre la fixation du manche 8, et, hors de cette section de manipulation, le bord 5 est roulé sur moins d'un tour (mais sur plus d'un demi-tour, et même sur plus des trois-quarts d'un tour) afin d'éviter que de l'eau de lavage y reste emprisonnée.

La présente invention n'est pas limitée au mode de réalisation précédemment décrit.

Il serait possible, que le rebord libre ne soit pas roulé sur l'ensemble de la périphérie, notamment quand l'extrémité libre de la paroi périphérique est par ailleurs protégée. Il pourrait en être ainsi, par exemple pour un récipient de coupelle, le manche protégeant (recouvrant) la section de manipulation. Par ailleurs, le manche peut être fixé définitivement à l'ergot (soit en usine, soit par l'utilisateur final auquel cas il est livré séparé), ou amovible. Le bord roulé pourrait également s'étendre sur la totalité de la paroi périphérique.

Selon un mode de réalisation qui ne fait pas partie de l'invention, le support de cuisson pourrait également être un couvercle d'appareil à raclette qui est destiné à reposer sur la résistance électrique de l'appareil. Dans ce cas, la paroi périphérique est une paroi tombante, et le rebord libre est le rebord inférieur (la cuisson des aliments ne se faisant pas dans le volume défini par la paroi de fond et la paroi périphérique). Dans ce cas, en principe, le bord roulé s'étend sur toute la périphérie du rebord libre (inférieur).

## Revendications

1. Récipient (1) pour la cuisson, par un appareil à raclettes, de portions d'aliment en faible quantité par rapport à sa contenance, récipient (1) comprenant une paroi de fond (2) de réception de l'aliment et une paroi périphérique (3) fermée qui s'étend sensiblement perpendiculairement vers le haut depuis la paroi de fond (2) et porte, sur une section de manipulation, un ergot (9) saillant s'étendant vers l'extérieur, **caractérisé en ce que** le récipient (1) est réalisé en acier, **en ce que** ses parois (2,3) ont une épaisseur de moins d'1 mm, et, de préférence, d'environ 0,5 mm, voire d'environ 0,4 mm, et **en ce que** la paroi périphérique (3) présente un bord roulé (5) le long de son rebord libre (4).

2. Récipient (1) selon la revendication 1, **caractérisé en ce que** le rebord (4) est suffisamment roulé pour éviter tout contact involontaire d'un utilisateur avec l'extrémité libre (6) de la paroi périphérique (3).

3. Récipient (1) selon la revendication 1 ou 2, **caractérisé en ce que** le bord roulé (5) s'étend sur la totalité de la paroi périphérique (3).

4. Coupelle (7) pour appareil à raclette, **caractérisée en ce qu'**elle comprend un récipient (1) selon l'une des revendications 1 à 3, et un manche (8) fixé à l'ergot (9).

## Claims

1. Support (1) for cooking, in a raclette device, small quantities of food relative to its capacity, said support (1) comprising a base wall (2) for holding the food and a peripheral closed wall (3) which extends substantially perpendicularly upwards from the base wall (2) and bears, on a handling section, a pin (9) projecting towards the exterior, **characterised in that** the support (1) is made of steel, **in that** its walls (2, 3) are at least 1 mm thick, and preferably, about 0.5 mm, or even 0.4 mm, and **in that** the peripheral wall (3) has a rolled edge (5) along its free edge (4).

2. Support (1) according to claim 1, **characterised in that** the edge (4) is rolled sufficiently so as to avoid any involuntary contact of the user with the free end (6) of the peripheral wall (3).

3. Support (1) according to claim 1 or 2, **characterised in that** the rolled edge (5) extends around the entirety of the peripheral wall (3).

4. Small dish (7) for a raclette device, **characterised in that** it comprises a support (1) according to one of claims 1 to 3, and a handle (8) secured to the pin (9).

## Patentansprüche

1. Behälter (1) zum Kochen von Nahrungsmittelportionen mittels einer Raclette-Vorrichtung in kleinen Mengen relativ zum Fassungsvermögen des Behälters (1), umfassend einen Aufnahmeboden (2) für das Nahrungsmittel und eine geschlossene Umfangswand (3), die sich im Wesentlichen senkrecht von dem Boden (2) nach oben erstreckt und an einem Betätigungsabschnitt einen vorstehenden, sich nach außen erstreckenden Zapfen (9) aufweist, **dadurch gekennzeichnet, dass** der Behälter (1) aus Stahl realisiert ist, dass dessen Wände (2, 3) eine Dicke von weniger als 1 mm, vorzugsweise von ungefähr 0,5 mm, insbesondere von ungefähr 0,4 mm, haben und dass die Umfangswand (3) entlang deren freiem Rand (4) einen Rollrand (5) aufweist.

2. Behälter (1) nach Anspruch 1, **dadurch gekennzeichnet, dass** der Rand (4) ausreichend gerollt ist zur Vermeidung jedes ungewollten Kontaktes einer Bedienperson mit dem freien Ende (6) der Umfangswand (3).

3. Behälter (1) nach Anspruch 1 oder 2, **dadurch gekennzeichnet, dass** sich der Rollrand (5) über die Gesamtheit der Umfangswand (3) erstreckt.

4. Schale (7) für eine Raclette-Vorrichtung, **dadurch gekennzeichnet, dass** sie einen Behälter (1) gemäß einem der Ansprüche 1 bis 3 und einen am Zapfen (9) befestigten Griff (8) umfasst.
